# EUROPEAN PATENT SPECIFICATION

(11) **EP 3 743 352 B1**
(45) Date of publication and mention of the grant of the patent: **09.03.2022**
(21) Application number: 19705568.4
(22) Date of filing: 22.01.2019
(51) Int. Cl.: B65D 65/46, B65D 30/00

(54) **BAG FOR FRUIT AND VEGETABLE SELF-SERVICE PRODUCTS**
BEUTEL FÜR OBST- UND GEMÜSESELBSTBEDIENUNGSPRODUKTE
SAC DESTINÉ À DES PRODUITS D'AUTO-SERVICE DE FRUITS ET DE LÉGUMES

(30) Priority: 25.01.2018 IT 201800001847
(43) Date of publication of application: 02.12.2020
(73) Proprietor: ADERCARTA S.P.A., 25030 Adro (BS) (IT)
(72) Inventor: LODA, Ennio, 25030 Adro (BS) (IT)
(74) Representative: Biesse S.r.l.
(86) International application number: PCT/IB2019/050515
(87) International publication number: WO 2019/145846

(56) References cited:
- FR-A1- 3 047 687
- JP-A- 2014 196 571
- US-A1- 2013 084 374

## Description

### DESCRIPTION

### Field of the Invention

In its most general aspect, the present invention concerns a bag for food products, in particular for fresh food products such as fruits and vegetables, and more particularly the invention concerns a bag of the aforesaid type for the so-called self-service.

### State of the art

The operators of the field, as well as end users, know that a law - number 123/2017, which transposes the EU 2015/720 directive - essentially prohibiting businesses from using and providing plastic bags, i.e. made of polymeric material obtained from petroleum-derived substances, for the transport of goods and products, both for hygienic purposes and as primary packaging for bulk food products, was entered into force in Italy on January 1, 2018.

Before the aforesaid law, both large and small-scale retailers widely used plastic bags as primary packaging for bulk food products in the fruit, vegetable, deli, meat and similar departments.

The use volumes of the aforesaid bags proved to be very high in the large-scale fruit and vegetable retail sector, in particular because of the so-called self-service system adopted, which requires the use of a single bag for each fruit or vegetable product purchased.

Following the entry into force of the aforesaid law, the plastic bags were mainly replaced by bags manufactured with so-called bioplastics, i.e. products with biodegradable and compostable materials obtained from annually renewable raw plant-based materials, mainly flour or corn starch, wheat or other cereals.

The decomposition time of the bioplastics used for such bags is of few months in composting, against about the one thousand years required for synthetic plastic materials derived from petroleum.

Although advantageous - given they confer the transparency required to control their content and are resistant against moist products - bioplastic bags are not without drawbacks.

The main drawbacks of bioplastic bags lie in the fact that they are compostable but not recyclable, so they create waste that involves costs for the implementation and management of composting stations, in addition to being expensive and easily subject to cuts or tears.

Moreover, as a result of the above and considering the very high number of bioplastic bags that must be manufactured each year, the concern is therefore clearly linked to the procurement of raw materials that are able to meet the huge demand and use of such bags.

For that matter, disadvantageously, the manufacturing of bioplastic bags involves a huge and increasing consumption of plant-based products that could otherwise be intended for human or animal consumption.

Paper bags, also used in fruit and vegetable departments and obtained with recycled fibers or pure long cellulose fibers, which have a grammage higher than 45 g/m², are also known.

These bags disadvantageously have a significant thickness, are generally brown in color and are, in any case, opaque instead of transparent or semitransparent and are not therefore used for the self-service system of supermarket stands.

Document FR 3 047 687 A1 discloses a method of manufacturing a waterproof bag for the composting or methanization of waste from a thin material which is pliable and resistant to oil and water.

Document JP 2014 196571 A discloses a paper having high and uniform transparency, containing a cellulose pulp and an amphoteric starch, which to further improve transparency and resistance to humidity can include aluminum sulfate and epichlorohydrin.

Document US 2013/084374 A1 discloses a bag containing foods to be re-heated or cooked and/or bakery products which are pre-baked and/or need to be re-baked, in which the bag can be used as a consumption container for such foods and products once heated, cooked or re-baked in it, in which the bag comprises or consists of single-sided or double-sided fluorine-coated transparent paper.

### Summary of the invention

Object of the present invention is to provide, in compliance with the existing regulations, a bag for fruit and vegetable self-service products having technical characteristics so that to overcome the aforesaid drawbacks of the known art, or anyhow a bag for fruit and vegetable self-service products other than the aforesaid bioplastic bags considered.

According to the invention, a bag is provided for fruit and vegetable self-service products, comprising a folded sheet and gluing means that are applied to the aforesaid folded sheet, forming a body with an opening and a closed bottom, characterized in that the aforesaid sheet is made of semitransparent calendered paper comprising cellulose fibers and epichlorohydrin, wherein the aforesaid cellulose fibers are exclusively constituted by virgin fibers, the aforesaid bag being semitransparent, resistant against moisture, recyclable and compostable.

Preferably, the aforesaid paper comprises an amount of epichlorohydrin ranging between 3 and 5 per thousand, calculated as dry weight of epichlorohydrin to the commercial weight of the paper.

Preferably, the aforesaid paper has a grammage ranging between 30 g/m² and 34 g/m², with ± 1.5 tolerance calculated by means of the ISO 536 method.

Preferably, the aforesaid paper has a transparency greater than 70%, with ≥ 69 tolerance, calculated with the ISO 22891 method.

Preferably, in the aforesaid paper, the percentage ratio between the wet transverse breaking load value and the dry transverse breaking load value, calculated by respectively using the ISO 3781 and ISO 1924-2 methods, is greater than 15%, preferably greater than 20%.

Preferably, the aforesaid bag comprises an upper flap located near the aforesaid opening.

Preferably, the aforesaid bag comprises a strip of paper combined with the aforesaid bottom to reinforce the bottom itself.

Preferably, the aforesaid bag is equipped with at least one through-hole, wherein the aforesaid at least one through-hole is preferably located in a position proximal to the aforesaid opening, more preferably located on the aforesaid upper flap.

According to the invention, a package comprising a plurality of bags is also provided, each comprising at least one respective through-hole of the aforesaid type, and further comprising combining means to group the aforesaid plurality of bags in a bundle of bags, wherein the aforesaid combining means are of plant-based origin and consist of a closed ring fastener that engages the aforesaid respective through-hole of each bag.

Moreover and according to the above, the invention further provides a method of making a plurality of bags of the aforesaid type and a method of making a package of the aforesaid type, the first comprising the steps of:
- a) providing a tape of calendered and semitransparent paper, wherein the aforesaid paper comprises epichlorohydrin in an amount ranging between 3 and 5 per thousand, calculated as dry weight of epichlorohydrin to the commercial weight of the paper, wherein the aforesaid paper is obtained from long and short cellulose fibers, wherein the aforesaid cellulose fibers exclusively consist of virgin fibers;
- b) forming a plurality of bags from the aforesaid tape of paper by means of printing, cutting, folding and gluing operations, wherein the aforesaid operations are carried out in a bag-making machine, wherein during the cutting operation, for each bag, a strip of paper is cut to achieve an upper flap in the bag, wherein during the gluing operation, for each bag, at least one part of the aforesaid cut strip is glued to a side portion of a lower edge of a remaining portion of paper to make a reinforced bottom in the bag, wherein during the gluing operation a synthetic-resin emulsion-based glue is used, thus achieving a plurality of semitransparent, resistant against moisture, fully recyclable and compostable bags.

In addition to the aforesaid steps a) and b), the method of making the aforesaid package comprises the steps of:
- c) grouping at least one portion of the aforesaid plurality of bags in a bundle of bags;
- d) piercing the aforesaid bundle of bags to obtain a bundle of perforated bags, each equipped with at least one through-hole;
- e) combining the bags of the aforesaid bundle of pierced bags amongst each other by using combining means consisting of a plant-based fastener, wherein the aforesaid fastener is a closed ring and engages the respective through-hole of each bag.

Preferably, the aforesaid semitransparent calendered paper is obtained by a passage between a plurality of contact lines in-between cylinders, the so-called NIPs, wherein contact surfaces made of metal material and synthetic material are alternated in each contact line (NIP).

### Brief list of the figures

Further characteristics and advantages of the invention will be better highlighted by the review of the following detailed description of a preferred, but not exclusive, embodiment illustrated for illustration purposes only and without limitations, with the aid of the accompanying drawings, in which:
- figures 1 and 2 show a front view and a respective back view of a bag for fruit and vegetable self-service products according to the present invention;
- figure 3 shows a schematic plan view of a sheet of paper with folding lines and cutting lines for making the bag of figures 1 and 2;

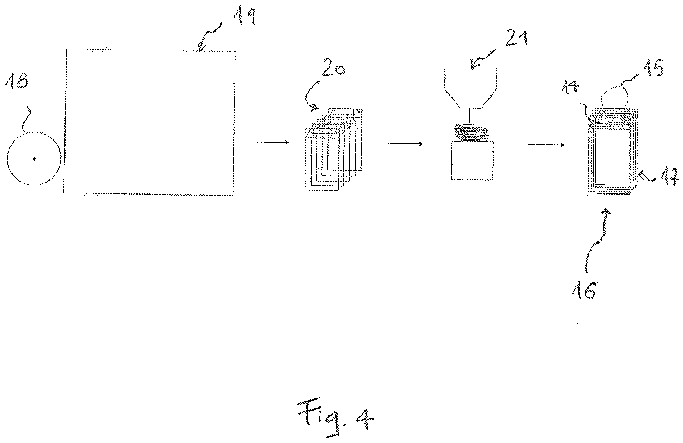

- figure 4 schematically shows a method of making a package comprising a bundle of bags of the type illustrated in figures 1 and 2, according to the present invention.

### Detailed description of the invention

With reference to the aforesaid figures, 1 denotes on the whole a bag for fresh food products, particularly fruit and vegetable self-service products.

The bag 1 essentially comprises a folded sheet and gluing means that are applied to the folded sheet, forming a body having an opening 2 and a closed bottom 3.

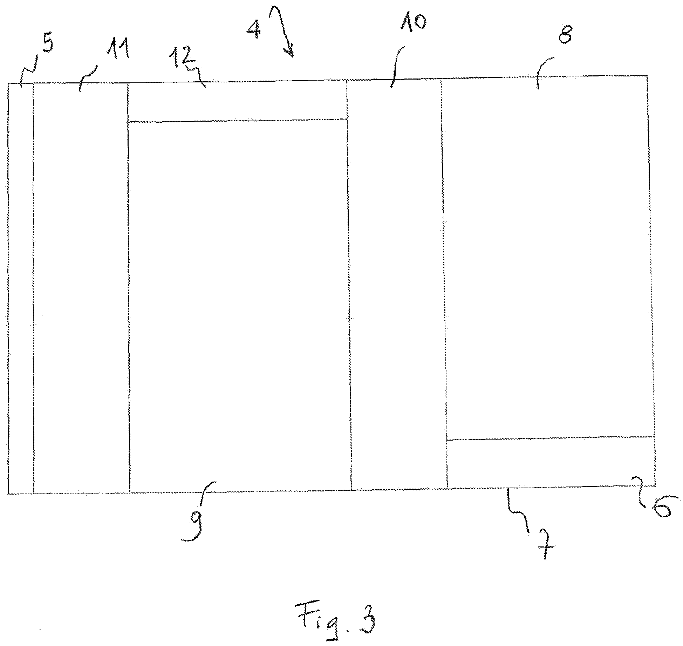

According to the invention, the aforesaid sheet, which is denoted by 4 in the example in figure 3 and shown open with folding lines and cutting lines, is made of semitransparent calendered paper comprising cellulose fibers and epichlorohydrin, wherein the cellulose fibers are exclusively constituted by virgin fibers and, therefore, the bag 1 is semitransparent, resistant against moisture, recyclable and compostable.

Particularly, epichlorohydrin, which is a resin suitable for contact with food, confers the desired resistance against moisture to the sheet **4,** therefore the desired mechanical resistance against wet or moist fruit and vegetable products to the bag **1,** and is preferably comprised in the paper in an amount ranging between 3 and 5 per thousand, calculated as dry weight of epichlorohydrin to the commercial weight of the paper.

Particularly, as far as the mechanical resistance is concerned, it should be noted that in the paper of the aforesaid sheet of paper, the percentage ratio between the wet transverse breaking load value and the dry transverse breaking load value, calculated by respectively using the ISO 3781 and ISO 1924-2 methods, is greater than 15%, preferably greater than 20%.

Also the percentage ratio between the wet longitudinal breaking load value and the dry longitudinal breaking load value, calculated by respectively using the ISO 3781 and ISO 1924-2 methods, is greater than 15%.

According to the invention, the paper of the aforesaid sheet of paper has a grammage ranging between 30 g/m² and 34 g/m², preferably a grammage equal to about 32 g/m², with ± 1.5 tolerance calculated by means of the ISO 536 method and, therefore, the bag **1** is particularly light.

Still according to the invention, the paper of the aforesaid sheet of paper has a transparency of more than 70%, and preferably a transparency equal to about 73%, with tolerance of ≥ 69, calculated by the ISO 22891 method.

Particularly, as far as the semi-transparency is concerned, it should be noted that it is obtained, as anticipated above, by using a pure bleached cellulose comprising 100% virgin fibers, and by calendering the paper, particularly in super-calenders by passing through a plurality of contact lines in-between cylinders, the so-called NIPs, wherein contact surfaces made of metal material and synthetic material are alternated in each contact line (NIP).

With reference to the sheet **4,** it should be noted that the gluing means preferably consists of a synthetic-resin emulsion-based glue that is applied near the longitudinal edge **5** and side portion **6** of a lower edge **7,** in order to form the aforesaid body with the opening **2** and the bottom **3.**

It should also be noted that the sheet **4** comprises a first portion **8** arranged above the side portion **6** of the lower edge **7,** which forms a back side in the bag **1,** and a second portion **9,** which forms a front side in the bag **1,** in-between which a first elongated portion **10,** intended to form first side bellows in the bag **1,** is comprised.

A second elongated portion **11,** intended to form second side bellows in the bag **1,** is comprised in-between the longitudinal edge **5** and the second portion **9** of the sheet **4** above which, as shown in the example of figure 3, there is a strip **12,** which, once cut, is intended to form a reinforcement portion of the bottom **3** in the bag **1** itself.

Furthermore, the cutting of the strip **12** determines the formation of an upper flap **13** in the bag **1,** particularly at the opening **2** on the back portion of the bag **1,** which makes it possible to close the bag by folding the upper flap and to possibly apply a subsequent adhesive label, as generally issued in the sales departments of fruit and vegetable self-service products.

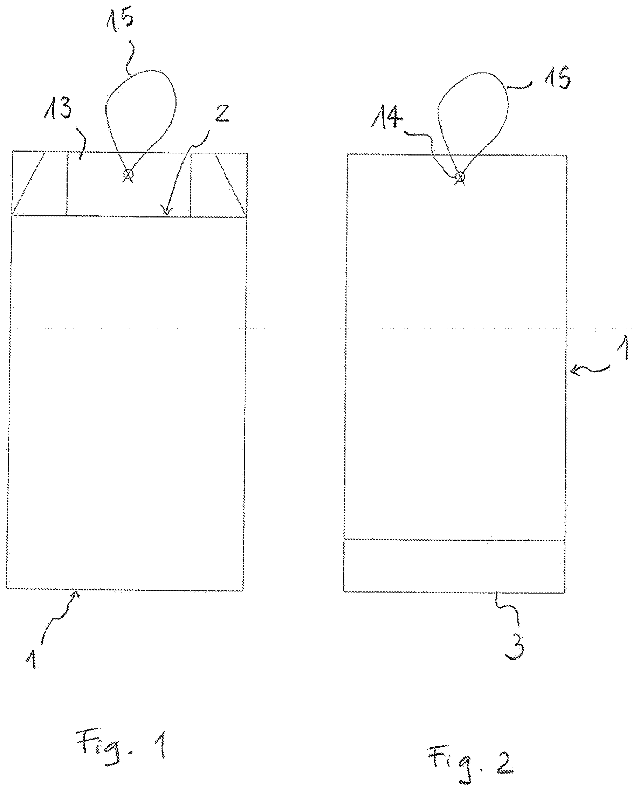

Furthermore, as shown in the examples of figures 1 and 2, the bag according to the present invention is equipped with at least one through-hole **14,** preferably located in a position proximal to the opening **2,** particularly on the upper flap **13,** which is advantageously engaged by a closed-ring fastener **15,** as will become clearer hereunder.

According to the above, the bag according to the present invention is therefore semitransparent and resistant against moisture, but also fully recyclable and compostable when required.

The present invention further provides a package **16** comprising a plurality of bags **1** and further comprising combining means to group the plurality of bags **1** in a bundle **17** of bags **1,** wherein the combining means are of plant-based origin and consist, as mentioned above, of a closed-ring fastener that engages the respective through-hole **14** of each bag.

This way, the package **16,** therefore the bundle **17** of bags **1,** can be hooked, for example to a display rack, making it particularly easy to withdraw each bag by pulling.

Moreover and according to the above, the invention further provides a method of making a plurality of bags of the aforesaid type considered and a method of making a package of the aforesaid type considered.

In detail, the method of making a plurality of bags according to the present invention comprises the steps of:
- a) providing a tape **18** of calendered and semitransparent paper and comprising epichlorohydrin in an amount ranging between 3 and 5 per thousand, calculated as dry weight of epichlorohydrin to the commercial weight of the paper, and wherein the paper is obtained from long and short cellulose fibers, wherein the cellulose fibers exclusively consist of virgin fibers;
- b) forming a plurality of bags of the aforesaid type from the tape **18** by means of printing, cutting, folding and gluing operations, wherein the aforesaid operations are carried out in a bag-making machine **19,** wherein during the cutting operation, for each bag, a strip **12** of paper is cut to achieve an upper flap **13** in the bag, wherein during the gluing operation, for each bag, at least one part of the aforesaid cut strip **12** is glued to a side portion **6** of a lower edge **7** of a remaining portion of paper to make a reinforced bottom in the bag, wherein during the gluing operation a synthetic-resin emulsion-based glue is used, thus achieving a plurality of semitransparent, resistant against moisture, fully recyclable and compostable bags.

In addition to the steps of the method of making the plurality of bags described above, the method of making the package **16** according to the present invention comprises the further steps of:
c) grouping at least one portion of the aforesaid plurality of bags in a bundle **20** of bags;
d) piercing the bundle **20** of bags, in a suitable hole-punching machine **21,** to obtain a bundle **17** of perforated bags each equipped with at least one through-hole **14;**
e) combining the bags of the aforesaid bundle **17** of pierced bags amongst each other by using combining means consisting of a plant-based fastener **15,** wherein the aforesaid fastener **15** is a closed ring and engages the respective through-hole **14** of each bag.

As far as the sheet of paper **4** is still concerned, it can briefly be noted that, in addition to what is reported above, it is obtained through the steps of:
- mixing water and a mixture of cellulose comprising only short and long virgin fibers, in a pulper, thus obtaining a first mixture;
- adding epichlorohydrin to the first mixture, thus obtaining a second mixture;
- refining the second mixture by crumbling the virgin fibers to confer mechanical resistance, candling and transparency to the paper, thus obtaining a third mixture;
- pressing and at least partially drying the third mixture, thus obtaining the aforesaid sheet **18** of paper.

In particular, the refining, which is carried out in a suitable refining machine, consists in crumbling the cellulose fibers into very small pieces to allow the paper to acquire mechanical resistance, candling and transparency, while the pressing and the at least partial drying (desiccation) are carried out by an apparatus of known type that comprises a flat table and presses of various types, as well as a drying section comprising a plurality of rollers for the passage of the paper.

The advantages of the present invention already made clear in the description above can be summarized by pointing out that a bag for food, such as fresh fruit and vegetable products, is provided, in particular for the so-called self-service, in pure paper, fully and easily recyclable as well as when required, for example if particularly dirty, in addition to being compostable since it is biodegradable, as well as economical, resistant against moist products and allows, thanks to its semi-transparency, to see the content, therefore making it easier to recognize and inspect it at the checkout counter and to check for possible stolen goods.

Moreover, the present bag, thanks to its paper structure, allows the fruits and vegetables in it contained to transpire and not to go moldy.

Moreover, a hookable package comprising a bundle of bags for food according to the present invention allows a single bag to be easily withdrawn, by a simple tear off, in the fruit and vegetable stands.

Therefore, the present invention advantageously reduces costs, eliminates the production of waste and promotes the recycling of the materials.

Moreover, the present bag can be customized graphically by using environmentally friendly water-based inks.

Furthermore, both the present bag and the present package can be manufactured in one process.

In order to meet incidental and specific requirements, several variations and modifications could be made by a field technician to the illustrated and described embodiments of present invention, provided that all are included in the scope of protection of the invention as defined by the following claims.

## Claims

1. Bag (1) for fruit and vegetable self-service products, comprising a folded sheet and gluing means that are applied to said folded sheet, forming a body with an opening (2) and a closed bottom (3), **characterized in that** said sheet is made of semitransparent calendered paper comprising cellulose fibers and epichlorohydrin, wherein said cellulose fibers are exclusively constituted by virgin fibers, said bag being semitransparent, resistant against moisture, recyclable and compostable.

2. Bag according to claim 1, wherein said paper comprises an amount of epichlorohydrin ranging between 3 and 5 per thousand, calculated as dry weight of epichlorohydrin to the commercial weight of the paper.

3. Bag according to claim 1 or 2, wherein said paper has a grammage ranging between 30 g/m² and 34 g/m², with ± 1.5 tolerance calculated by means of the ISO 536 method.

4. Bag according to claim 3, wherein said paper has a transparency of more than 70%, with tolerance of ≥ 69, calculated by means of the ISO 22891 method.

5. Bag according to any one of claims 2-4, wherein in said paper the percentage ratio between the wet transverse breaking load value and the dry transverse breaking load value, calculated by respectively using the ISO 3781 and ISO 1924-2 methods, is greater than 15%, preferably greater than 20%.

6. Bag according to any one of the preceding claims, comprising a strip of paper combined with said bottom to reinforce said bottom.

7. Bag according to any one of the preceding claims, comprising an upper flap (13) located near said opening (2).

8. Bag according to any one of the preceding claims, wherein said bag is equipped with at least one through-hole (14).

9. Bag according to claim 8, wherein said at least one through-hole (14) is located on said upper flap (13).

10. Package (16) comprising a plurality of bags according to claim 9 and combining means to group said plurality of bags in a bundle (17) of bags (1), wherein said combining means are of plant-based origin and consist of a closed ring fastener (15) that engages the through-holes of the bags.

11. Method of making a plurality of bags, comprising the steps of:
- a) providing a tape (18) of calendered and semitransparent paper, wherein said paper comprises epichlorohydrin in an amount ranging between 3 and 5 per thousand, calculated as dry weight of epichlorohydrin to the commercial weight of the paper, wherein said paper is obtained from long and short cellulose fibers, wherein said cellulose fibers exclusively consist of virgin fibers;
- b) forming a plurality of bags from said tape by means of printing, cutting, folding and gluing operations, wherein said operations are carried out in a bag-making machine (19), wherein during the cutting operation, for each bag, a strip (12) of paper is cut to achieve an upper flap (13) on the bag, wherein during the gluing operation, for each bag, at least one part of the aforesaid strip (12) is glued to a side portion (6) of a lower edge (7) of a remaining portion of paper to make a reinforced bottom (3) for the bag, wherein during the gluing operation a synthetic-resin emulsion-based glue is used, thus achieving a plurality of semitransparent, resistant against moisture, fully recyclable and compostable bags.

12. Method of making a package according to claim 10, comprising the steps of the method according to claim 11, and further comprising the steps of:
- c) grouping at least one portion of said plurality of bags in a bundle (20) of bags;
- d) piercing said bundle of bags to obtain a bundle (17) of perforated bags, each equipped with at least one through-hole (14);
- e) combining the bags of said bundle (17) of pierced bags amongst each other by using combining means consisting of a plant-based fastener (15), wherein said fastener is a closed ring and engages the respective through-hole of each bag.

## Patentansprüche

1. Beutel (1) für Obst- und Gemüseprodukte zur Selbstbedienung, umfassend ein gefaltetes Blatt und Klebemittel, die an dem gefalteten Blatt angebracht sind zur Bildung eines Körpers mit einer Öffnung (2) und einem geschlossenen Boden (3), **dadurch gekennzeichnet, dass** das Blatt aus halbtransparentem kalandriertem Papier hergestellt ist, das Zellulosefasern und Epichlorhydrin umfasst, wobei die Zellulosefasern ausschließlich aus Frischfasern bestehen, wobei der Beutel halbtransparent, feuchtigkeitsbeständig, recycelbar und kompostierbar ist.

2. Beutel nach Anspruch 1, wobei das Papier eine Menge an Epichlorhydrin zwischen 3 und 5 %o enthält, berechnet als Trockengewicht des Epichlorhydrins in Bezug auf das Handelsgewicht des Papiers.

3. Beutel nach Anspruch 1 oder 2, wobei das Papier eine Grammatur zwischen 30 g/m² und 34 g/m² aufweist, mit einer Toleranz von ± 1,5, berechnet nach der ISO 536 Methode.

4. Beutel nach Anspruch 3, wobei das Papier eine Durchsichtigkeit von mehr als 70 % aufweist, mit einer Toleranz von ≥ 69, berechnet nach der ISO 22891 Methode.

5. Beutel nach einem der Ansprüche 2 bis 4, wobei in dem besagten Papier das Prozentverhältnis zwischen dem Wert der Nassquerbruchkraft und dem Wert der Trockenquerbruchkraft, berechnet nach den ISO 3781- bzw. ISO 1924-2-Methoden, größer als 15 %, vorzugsweise größer als 20 % ist.

6. Beutel nach einem der vorhergehenden Ansprüche, umfassend einen mit dem Boden verbundenen Papierstreifen zur Verstärkung des Bodens.

7. Beutel nach einem der vorhergehenden Ansprüche, umfassend eine obere Klappe (13), die in der Nähe der Öffnung (2) angeordnet ist.

8. Beutel nach einem der vorhergehenden Ansprüche, wobei der Beutel mit mindestens einem Durchgangsloch (14) ausgestattet ist.

9. Beutel nach Anspruch 8, wobei das mindestens eine Durchgangsloch (14) an der oberen Klappe (13) angeordnet ist.

10. Verpackung (16), die eine Vielzahl von Beuteln nach Anspruch 9 und Verbindungsmittel zur Gruppierung der Vielzahl von Beuteln zu einem Bündel (17) von Beuteln (1) umfasst, wobei die Verbindungsmittel von pflanzlichem Ursprung sind und aus einem geschlossenem Ringverschluss (15) bestehen, der mit den Durchgangslöchern der Beutel in Eingriff steht.

11. Verfahren zur Herstellung einer Vielzahl von Beuteln, das folgende Schritte umfasst:
- a) Bereitstellen eines Bandes (18) aus kalandriertem und halbtransparentem Papier, wobei das Papier Epichlorhydrin in einer Menge zwischen 3 und 5 %o, berechnet als Trockengewicht des Epichlorhydrins zum Handelsgewicht des Papiers, enthält, wobei das Papier aus langen und kurzen Zellulosefasern gewonnen wird, wobei die Zellulosefasern ausschließlich aus Frischfasern bestehen;
- b) Bilden einer Vielzahl von Beuteln aus dem Band mittels Druck-, Schneid-, Falt- und Klebevorgängen, wobei die Vorgänge in einer Beutelherstellmaschine (19) ausgeführt werden, wobei während des Schneidvorgangs für jeden Beutel ein Papierstreifen (12) zur Bildung einer oberen Klappe (13) an dem Beutel geschnitten wird, wobei während des Klebevorgangs für jeden Beutel mindestens ein Teil des besagten Streifens (12) an einen Seitenabschnitt (6) einer unteren Kante (7) eines verbleibenden Papierabschnitts geklebt wird, um einen verstärkten Boden (3) für den Beutel zu erzeugen, wobei während des Klebevorgangs ein Klebstoff auf Kunstharzemulsions-Basis verwendet wird, wodurch eine Vielzahl von halbtransparenten, feuchtigkeitsbeständigen, vollständig recycelbaren und kompostierbaren Beuteln gebildet wird.

12. Verfahren zur Herstellung einer Verpackung nach Anspruch 10, umfassend die Schritte des Verfahrens nach Anspruch 11 und ferner umfassend die Schritte:
- c) Gruppieren mindestens eines Teils der Vielzahl von Beuteln zu einem Bündel (20) von Beuteln;
- d) Durchstechen des Beutelbündels, um ein Bündel (17) von perforierten Beuteln zu erhalten, die jeweils mit mindestens einem Durchgangsloch (14) versehen sind;
- e) Verbinden der Beutel des Bündels (17) von durchstochenen Beuteln untereinander unter Verwendung von Verbindungsmitteln, die aus einem Verschluss (15) von pflanzlichem Ursprung bestehen, wobei der Verschluss ein geschlossener Ring ist und in das jeweilige Durchgangsloch eines jeden Beutels eingreift.

## Revendications

1. Sac (1) pour fruits et légumes en libre-service, comprenant une feuille pliée et des moyens d'encollage qui sont appliqués sur ladite feuille pliée, formant un corps avec une ouverture (2) et un fond fermé (3), **caractérisé en ce que** ladite feuille est réalisée dans un papier calandré semi-transparent comprenant fibres de cellulose et épichlorhydrine, dans lequel lesdites fibres de cellulose sont exclusivement constituées de fibres vierges, ledit sac étant semi-transparent, résistant à l'humidité, recyclable et compostable.

2. Sac selon la revendication 1, dans lequel ledit papier comprend une quantité d'épichlorhydrine comprise entre 3 et 5 pour mille, calculée en poids sec d'épichlorhydrine par rapport au poids commercial du papier.

3. Sac selon la revendication 1 ou 2, dans lequel ledit papier présente un grammage compris entre 30 g/m² et 34 g/m², avec une tolérance de ± 1,5, calculée au moyen de la méthode ISO 536.

4. Sac selon la revendication 3, dans lequel ledit papier présente une transparence de plus de 70%, avec une tolérance de ≥ 69, calculée au moyen de la méthode ISO 22891.

5. Sac selon l'une quelconque des revendications 2-4, dans lequel, dans ledit papier, le rapport en pourcentage entre la valeur de charge de rupture transversale humide et la valeur de charge de rupture transversale sèche, calculées en utilisant respectivement les méthodes ISO 3781 et ISO 1924-2, est supérieur à 15%, de préférence supérieur à 20%.

6. Sac selon l'une quelconque des revendications précédentes, comprenant une bande de papier associée audit fond pour renforcer ledit fond.

7. Sac selon l'une quelconque des revendications précédentes, comprenant un rabat supérieur (13) situé à côté de ladite ouverture (2).

8. Sac selon l'une quelconque des revendications précédentes, dans lequel ledit sac est pourvu d'au moins un trou traversant (14).

9. Sac selon la revendication 8, dans lequel au moins un trou traversant (14) est situé sur ledit rabat supérieur (13).

10. Emballage (16) comprenant une pluralité de sacs selon la revendication 9 et des moyens d'association pour regrouper ladite pluralité de sacs dans un paquet (17) de sacs (1), dans lequel lesdits moyens d'association sont d'origine végétale et consistent en une fermeture à anneau fermé (15) qui engage les trous traversants des sacs.

11. Méthode de fabrication d'une pluralité de sacs, comprenant les étapes de:
- a) fournir une bande (18) de papier calandré et semi-transparent, dans laquelle ledit papier comprend épichlorhydrine en une quantité comprise entre 3 et 5 pour mille, calculée en poids sec d'épichlorhydrine par rapport au poids commercial du papier, dans laquelle ledit papier est obtenu à partir de longues et de courtes fibres de cellulose, dans laquelle lesdites fibres de cellulose consistent uniquement en fibres vierges;
- b) former une pluralité de sacs à partir de ladite bande au moyen d'opérations d'impression, de découpe, de pliage et de collage, dans laquelle lesdites opérations sont effectuées dans une machine de fabrication de sacs (19), dans laquelle, pendant l'opération de découpe, une bande (12) de papier est découpée, pour chaque sac, pour réaliser un rabat supérieur (13) sur le sac, dans laquelle, pendant l'opération de collage, au moins une partie de la bande susmentionnée (12) est collée, pour chaque sac, sur une portion latérale (6) d'un bord inférieur (7) d'une portion restante de papier pour réaliser un fond renforcé (3) pour le sac, dans laquelle, pendant l'opération de collage, une colle à base d'émulsion de résine synthétique est utilisée, réalisant ainsi une pluralité de sacs semi-transparents, résistants à l'humidité, entièrement recyclables et compostables.

12. Méthode de fabrication d'un emballage selon la revendication 10, comprenant les étapes de la méthode selon la revendication 11, et en outre comprenant les étapes de:
- c) regrouper au moins une portion de ladite pluralité de sacs en un paquet (20) de sacs;
- d) percer ledit paquet de sacs pour obtenir un paquet (17) de sacs perforés, chacun pourvu d'au moins un trou traversant (14);
- e) associer les sacs dudit paquet (17) de sacs percés les uns aux autres en utilisant des moyens d'association constitués d'une fermeture d'origine végétale (15), dans laquelle ladite fermeture est un anneau fermé et engage le trou traversant respectif de chaque sac.
